# FASCICULE DE BREVET EUROPEEN

(11) **EP 2 414 655 B1**
(45) Date de publication et mention de la délivrance du brevet: **05.06.2013**
(21) Numéro de dépôt: 10711880.4
(22) Date de dépôt: 29.03.2010
(51) Int. Cl.: F02C 7/047, F02K 3/06, B64C 11/14, B64D 15/16

(54) **Capot d'entrée tournant pour turbomachine, comprenant une extrémité avant excentrée et turbomachine associée**
Drehbare Einlasskonus für ein Turbotriebwerk mit einem exzentrischen Vorderende und zugehöriges Turbotriebwerk
Rotating inlet cone for a turbomachine including an eccentric front end and corresponding turbomachine

(30) Priorité: 31.03.2009 FR 0952056
(43) Date de publication de la demande: 08.02.2012
(73) Titulaire: Snecma, 75015 Paris (FR)
(72) Inventeur: DELAPIERRE, Mickaël, F-75012 Paris (FR); GIGNOUX, Hervé, F-77000 Vaux Le Penil (FR); LORO, Gaël, F-77380 Combs La Ville (FR); WINTENBERGER, Sylvie, F-75019 Paris (FR)
(74) Mandataire: Ilgart, Jean-Christophe
(86) Numéro de dépôt international: PCT/EP2010/054080
(87) Numéro de publication internationale: WO 2010/112453

(56) Documents cités:
- GB-A- 540 711
- GB-A- 1 557 856

## Description

### DOMAINE TECHNIQUE

La présente invention se rapporte au domaine des turbomachines, et plus particulièrement aux turbomachines pour aéronef, de préférence du type turboréacteurs. Plus précisément, l'invention concerne le capot d'entrée tournant équipant ces turbomachines.

### ETAT DE LA TECHNIQUE ANTERIEURE

Un tel capot d'entrée tournant est généralement constitué de deux parties fixées l'une à l'autre, la partie avant en forme de cône, et la partie arrière en forme de virole. De manière connue, l'extrémité arrière de la virole arrière affleure les plateformes des aubes de soufflante, en se situant dans la continuité aérodynamique avant de celles-ci.

Le cône avant présente quant à lui une extrémité avant en forme de pointe de cône centrée sur l'axe de rotation du capot d'entrée, correspondant également à l'axe longitudinal de la soufflante et de l'ensemble de la turbomachine.

Cette pointe est connue pour être un point de la turbomachine favorisant l'accrétion de glace, étant donné que son centrage sur l'axe de rotation ne permet pas d'appliquer des forces centrifuges importantes. De ce fait, la glace se formant sur la pointe de cône avant peut atteindre une taille élevée avant de se décrocher, avec le risque, lorsqu'elle finit par se désolidariser de la pointe, d'endommager les aubes de soufflante qu'elle percute.

Pour faire face à ce risque, il est connu d'implanter un système de dégivrage dont le but est de faire en sorte que la glace accrétée sur la pointe de cône avant soit éjectée avant d'atteindre une taille critique. Cependant, ce type de système est coûteux en termes de masse et d'encombrement, et surtout particulièrement délicat à mettre en place en raison de la nature tournante du capot d'entrée qui en est équipé.

GB 1 557 856 décrit l'état de la technique.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a tout d'abord pour objet un capot d'entrée tournant pour turbomachine, ledit capot présentant un axe de rotation et comprenant un cône avant définissant une extrémité avant du capot. Cette extrémité avant est agencée de manière excentrée par rapport à cet axe de rotation du capot d'entrée. Selon l'invention, ledit cône avant est tronqué par une surface de troncature définissant ladite extrémité avant du capot d'entrée.

Ainsi, en fonctionnement, lorsque de la glace est accrétée sur l'extrémité avant du capot d'entrée, le caractère excentré de cette extrémité implique avantageusement que la glace est soumise à des forces centrifuges conséquentes. Celles-ci favorisent son éjection, et lui permettent de se désolidariser de la tige avant qu'elle n'atteigne une taille critique vis-à-vis du risque d'endommagement des aubes de soufflante situées en aval.

L'invention présente par conséquent l'avantage de reposer sur une conception simple, offrant une très grande fiabilité, et peu pénalisante en termes de coûts et d'encombrement. Son obtention par troncature d'un cône avant contribue largement à la simplicité de sa conception.

Selon un mode de réalisation préféré de la présente invention, ledit cône avant est oblique d'axe incliné par rapport audit axe de rotation du capot d'entrée. Néanmoins, il est également possible que le cône avant soit droit, d'axe confondu avec ledit axe de rotation du capot d'entrée. L'intérêt est alors de pouvoir partir d'un cône avant classique de l'art antérieur, et d'opérer la troncature afin d'aboutir à la réalisation souhaitée.

De préférence, ladite surface de troncature est sensiblement plane, inclinée par rapport à un plan orthogonal à l'axe de rotation du capot d'entrée.

Comme évoqué ci-dessus, quel que soit le mode de réalisation envisagé, il est préférentiellement fait en sorte que le capot d'entrée tournant présente, de l'avant vers l'arrière, ledit cône avant, et une virole arrière.

Enfin, l'invention a également pour objet une turbomachine, de préférence pour aéronef, comprenant un capot d'entrée tournant tel que décrit ci-dessus.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1, représente une vue en demi-coupe longitudinale d'une partie avant de turbomachine d'aéronef, selon un mode de réalisation préféré de la présente invention ;
- la figure 2 représente schématiquement, de façon agrandie, le capot d'entrée tournant équipant la turbomachine montrée sur la figure 1 ; et
- la figure 3 représente une vue schématique en perspective du cône avant équipant le capot d'entrée tournant montré sur la figure 2.

### EXPOSÉ DÉTAILLÉ DE MODES DE RÉALISATION PRÉFÉRÉS

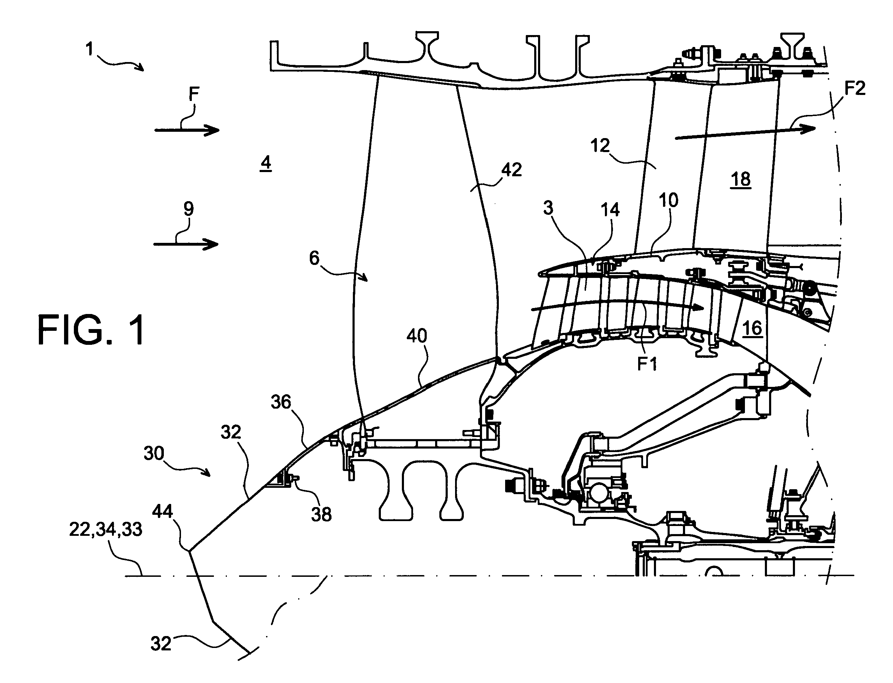

En référence à la figure 1, on peut apercevoir une partie avant 1 de turbomachine pour aéronef, du type turboréacteur, selon un mode de réalisation préféré de la présente invention.

Sur la figure 1, il a seulement été représenté le compresseur basse pression 3 du générateur de gaz, qui est par exemple à double corps.

La turbomachine dispose, dans une direction générale d'écoulement du fluide à travers cette turbomachine, allant de l'avant vers l'arrière comme cela est représenté schématiquement par la flèche 9, d'une entrée d'air 4, d'une soufflante 6, d'un bec de séparation des flux 14 duquel sont issus un canal primaire annulaire 16 et un canal secondaire annulaire 18 agencé radialement vers l'extérieur par rapport au canal primaire 16, et d'une virole interne 10 de support des aubages directeurs de sortie de soufflante 12. Bien entendu, ces éléments classiques connus de l'homme du métier disposent chacun d'une forme annulaire, centrée sur un axe longitudinal 22 de la turbomachine.

Ainsi, le flux d'air F traversant la soufflante 6 se divise en deux flux distincts suite à son entrée au contact avec l'extrémité amont du bec de séparation 14, à savoir en un flux primaire F1 pénétrant dans le canal 16 et un flux secondaire F2 pénétrant dans le canal 18 et traversant les aubages directeurs de sortie de soufflante 12.

En outre, la turbomachine comprend à son extrémité avant un capot d'entrée tournant 30, solidaire en rotation de la soufflante 6. De façon connue, le capot 30 présente un cône avant 32 d'axe 33, et une virole arrière 36 montée fixement sur le cône 32, de préférence par boulons 38. Son extrémité arrière affleure les plateformes 40 des aubes de soufflante 42, en se situant dans la continuité aérodynamique avant de ces plateformes.

L'une des particularités de la présente invention réside dans le fait que l'extrémité avant 44 du capot d'entrée tournant 30 est excentrée de l'axe de rotation 34 de ce capot 30, l'axe 34 correspondant également à l'axe de la soufflante 6, et plus généralement à l'axe longitudinal 22 de la turbomachine.

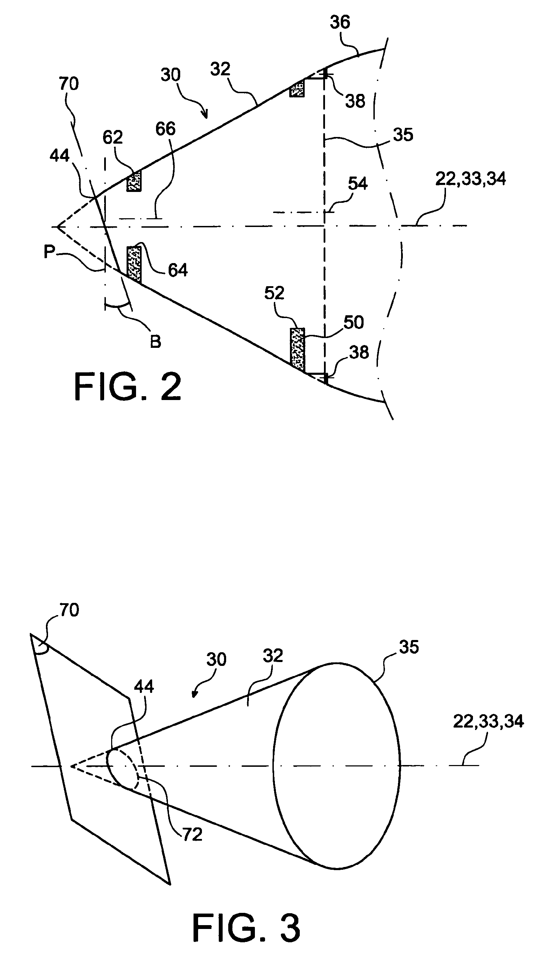

Dans le mode de réalisation préféré représenté sur les figures 1 à 3, le caractère excentré de l'extrémité avant 44 est obtenu à l'aide d'un cône avant 32 droit, dont l'axe 33 est confondu avec l'axe de rotation 34 du cône et l'axe longitudinal de la turbomachine 22. De plus, la partie avant de ce cône est tronquée par une surface de troncature 70 sensiblement plane, inclinée par rapport à un plan P orthogonal aux axes 22, 34, par exemple d'un angle B compris entre 1 et 15°. Ainsi, c'est la troncature qui permet de définir l'extrémité avant excentrée 44, puisque celle-ci correspond au point le plus avant de l'ellipse 72 formée par l'intersection entre le cône 32 et la surface de troncature 70 sensiblement plane, comme cela est visible sur la figure 3.

Il est noté qu'une réalisation similaire pourrait être envisagée avec un cône avant 32 oblique, à savoir présentant un axe 33 incliné par rapport à l'axe de rotation 34.

De façon connue, un cordon d'équilibrage 50 peut équiper le cône avant 32, en étant agencé intérieurement à proximité de la liaison boulonnée avec la virole arrière 36. Ce cordon 50 a donc vocation à compenser le balourd, et présente donc une épaisseur évolutive selon la direction circonférentielle, comme montré schématiquement sur la figure 2. Sa réalisation peut consister en un alésage 52 d'axe 54 excentré par rapport aux axes 22, 34. Pour compléter le cordon d'équilibrage 50 et compenser le balourd résultant essentiellement du décalage de l'extrémité avant 44 par rapport à l'axe de rotation 34, il est prévu un autre cordon d'équilibrage 62, agencé intérieurement à proximité de l'extrémité avant 44. Ce cordon 62 présente donc une épaisseur évolutive selon la direction circonférentielle, comme montré schématiquement sur la figure 2, sa réalisation pouvant également consister en un alésage 64 d'axe 66 excentré par rapport aux axes 22, 34. Alternativement ou simultanément, le balourd pourrait être compensé par une épaisseur évolutive, dans la direction circonférentielle, de la peau formant le cône 32.

Lorsque la soufflante et le capot d'entrée 30 tournent, avec l'extrémité avant excentrée 44 portant de la glace 60, celle-ci est soumise à des forces centrifuges conséquentes favorisant son éjection du capot.

Bien entendu, diverses modifications peuvent être apportées par l'homme du métier à l'invention qui vient d'être décrite, uniquement à titre d'exemples non limitatifs.

## Revendications

1. Capot d'entrée tournant (30) pour turbomachine, ledit capot présentant un axe de rotation (34) et comportant un cône avant (32) définissant une extrémité avant (44) du capot d'entrée, ladite extrémité avant (44) étant agencée de manière excentrée par rapport audit axe de rotation (34) du capot d'entrée, **caractérisé en ce que** ledit cône avant (32) est tronqué par une surface de troncature (70) définissant ladite extrémité avant (44) du capot d'entrée.

2. Capot selon la revendication 1, **caractérisé en ce que** ledit cône avant (32) est oblique d'axe (33) incliné par rapport audit axe de rotation (34) du capot d'entrée.

3. Capot selon la revendication 1, **caractérisé en ce que** ledit cône avant (32) est droit d'axe (33) confondu avec ledit axe de rotation (34) du capot d'entrée.

4. Capot selon l'une quelconque des revendications précédentes, **caractérisé en ce que** ladite surface de troncature (70) est sensiblement plane, inclinée par rapport à un plan (P) orthogonal à l'axe de rotation (34) du capot d'entrée.

5. Capot selon l'une quelconque des revendications précédentes, **caractérisé en ce qu'**il présente, de l'avant vers l'arrière, ledit cône avant (32), et une virole arrière (36).

6. Turbomachine (1), de préférence pour aéronef, comprenant un capot d'entrée tournant (44) selon l'une quelconque des revendications précédentes.

## Patentansprüche

1. Drehbares Eintrittsgehäuse (30) für eine Turbomaschine, wobei das Gehäuse eine Rotationsachse (34) aufweist und einen vorderen Konus (32), der ein vorderes Ende (44) des Eintrittsgehäuses definiert, umfasst, wobei das vordere Ende (44) gegenüber der Rotationsachse (34) des Eintrittsgehäuses außermittig angeordnet ist, **dadurch gekennzeichnet, dass** der vordere Konus (32) durch eine Stutzfläche (70), welche das vordere Ende (44) des Eintrittsgehäuses definiert, abgestumpft ist.

2. Gehäuse nach Anspruch 1, **dadurch gekennzeichnet, dass** der vordere Konus (32) schräg und seine Achse (33) gegenüber der Rotationsachse (34) des Eintrittsgehäuses geneigt ist.

3. Gehäuse nach Anspruch 1, **dadurch gekennzeichnet, dass** der vordere Konus (32) gerade und seine Achse (33) mit der Rotationsachse (34) des Eintrittsgehäuses zusammenfällt.

4. Gehäuse nach einem der vorhergehenden Ansprüche, **dadurch gekennzeichnet, dass** die Stutzfläche (70) im Wesentlichen eben, gegenüber einer zur Rotationsachse (34) des Eintrittsgehäuses orthogonalen Ebene (P) geneigt ist.

5. Gehäuse nach einem der vorhergehenden Ansprüche, **dadurch gekennzeichnet, dass** es von vorne nach hinten den vorderen Konus (32) und einen hinteren Ring (36) aufweist.

6. Turbomaschine (1), vorzugweise für ein Flugzeug, umfassend ein drehbares Eintrittsgehäuse (44) nach einem der vorhergehenden Ansprüche.

## Claims

1. Rotating inlet cowl (30) for a turbine engine, said cowl having a rotation axis (34) and comprising a forward cone (32) defining a forward end (44) of the inlet cowl, said forward end (44) being arranged to be eccentric relative to said rotation axis (34) of the inlet cowl, **characterised in that** said forward cone (32) is truncated by a truncation surface (70) defining said forward end (44) of the inlet cowl.

2. Cowl according to claim 1, **characterised in that** said forward cone (32) is oblique with an axis (33) inclined from said axis of rotation (34) of the inlet cowl.

3. Cowl according to claim 1, **characterised in that** said forward cone (32) has an axis (33) parallel to and coincident with said inlet cowl rotation axis (34).

4. Cowl according to any one of the previous claims, **characterised in that** truncation surface (70) is approximately plane, inclined relative to a plane (P) orthogonal to the axis of rotation (34) of the inlet cowl.

5. Cowl according to any ane of the previous claims, **characterised in that** it comprises said front cone (32) forward from a rear shroud (36).

6. Turbine engine (1), preferably for an aircraft, comprising a rotating inlet cowl (44) according to any one of the previous claims.
